# EUROPEAN PATENT SPECIFICATION

(11) **EP 1 534 061 B1**
(45) Date of publication and mention of the grant of the patent: **10.12.2008**
(21) Application number: 03771184.3
(22) Date of filing: 24.07.2003
(51) Int. Cl.: A01G 27/00

(54) **PLANT WATERING SYSTEM**
PFLANZENBEWûSSERUNGSSYSTEM
SYSTEME D'ARROSAGE DE PLANTES

(30) Priority: 27.07.2002 GB 0217458
(43) Date of publication of application: 01.06.2005
(73) Proprietor: Smart Tech Ltd., Glasgow G61 3NY (GB)
(72) Inventor: GRAHAM, Graham, Glasgow G61 3NY (GB); MARTIN, Charles, Glasgow G75 0JU (GB)
(74) Representative: Rutherford, Claire
(86) International application number: PCT/GB2003/003266
(87) International publication number: WO 2004/010769

(56) References cited:
- EP-A- 0 072 213
- EP-A- 0 165 112
- WO-A-02/35918
- WO-A-88/01472
- WO-A-91/00316
- WO-A-94/26093
- DE-A- 3 545 250
- FR-A- 2 368 883
- FR-A- 2 406 387
- US-A- 3 900 378

## Description

This invention relates to a plant watering system. In particular, it relates to a plant watering system which allows the long term watering of plants, without the need for an open reservoir.

The watering of plants both in the home and commercially poses an easily identifiable problem. For example, the problem of providing a plant with water on a regular basis is both time consuming and, in some instances, can be difficult depending on the positioning of the plants (i.e., above shop fronts, etc.) Also, over-watering of plants can be a problem when a large quantity of water is poured into the soil to try and cut down the number of times a plant needs to be tended. There are also problems when moving plants if there is an open reservoir of water being used to keep them healthy, as movement or container breakage can cause spillage of the water very easily. Open water can also provide a breeding ground for micro-organisms such as algae, worms, insects such as maggots and flies which can cause and propagate plant problems and include the mosquito which can propagate human disease.

The prior shows a number of inventions that aim to overcome the above mentioned problems. For example, International Patent Application No. WO02/35918 in the name Christopher Raymond Moran relates to apparatus for cultivating plants where a vessel containing plant cultivating medium has a number of apertures, and these apertures are substantially covered by a water permeable polymer which controls water entry into the vessel. The vessel and polymer sit in a reservoir for the aqueous media. However, it is worth noting that in this instance a reservoir of liquid water is still required, causing the problem of spillage during movement and the possibility of contamination by micro-organisms. Also, the versatility of the product is low, as the polymer is included as part of the total vessel.

It is an object of the present invention to provide a plant watering system which allows the long term watering of plants without the need for frequent regular attention.

It is a further object of the present invention to provide a plant watering system where there is no open reservoir of water, therefore reducing the likelihood of spillage and/or contamination by micro-organisms.

A yet further object of the present invention is to provide a plant watering system which can be used on a wide range of plants which have different water requirements.

A yet further object of the present invention is to provide a plant watering system that is flexible, in that it can be used with a wide range of indoor and outdoor pots and containers.

A yet further object is to provide a plant watering system which can utilise unfiltered water from natural rainwater or a wide bore feed, making considerable savings with regard to filtration requirements.

A yet further object is to provide a plant watering system which has a self regulating water charging characteristic.

According to a first aspect of the present invention, there is provided a plant cultivation system comprising a hydrogel contained within porous enclosure, characterised in that the hydrogel is a particulate poly(ethylene oxide) which has been rendered insoluble in water by chemical or physical cross-linking and that the porous enclosure is a conformable sealed porous bag.

Optionally the plant cultivation system is placed close to the roots of plants growing in the ground.

Alternatively the plant cultivation system is placed close to the roots of plants growing in pots or containers.

Most preferably the hydrogel is a hydrogel which retains a high degree of rigidity at available degrees of swelling with water.

Preferably the hydrogel particles are between 100 microns to 1cm in diameter.

Optionally, the polymer may contain additives.

One option is that the polymer may be coloured.

Preferably the polymer swells rapidly on contact with water.

Preferably 1kg of dry polymer will store 3 to 20 litres of water.

Most preferably the porous bag is rapidly permeable to water.

Preferably the bag may be produced in different sizes, so that it is suitable for a range of plants and containers.

Optionally, the bag may be produced in a range of different shapes, so that it is suitable for a range of plants and containers.

Optionally, the amount of polymer in a porous bag is altered depending on the water requirements of the plant for which it is to be used with.

Optionally the size of the pores in the exterior material of the porous bag may have sizes as large as possible without allowing the significant escape of the contained particulate hydrogel.

Optionally, the porous bag is sealed by heat sealing.

Alternatively, the bag is sealed by stitching.

A further alternative is that the bag is sealed by glue.

Alternatively the bag may be sealed by one or more of the abovementioned means.

Preferably the porous bag is produced from a material with an air water surface contact angle below 90°.

Optionally, for plants with low water requirements, the porous bag can be produced from a material with an air water surface contact angle of greater than 90°.

Most preferably the porous bag is produced from cellulose or a cellulose derivative.

Optionally, the porous bag may be knitted, braided, woven or in the form of felt.

The term bag as used herein includes all porous enclosures in which the containment is of an expandable or conformable design. It can comprise in whole or in part more rigid material with a section or mechanism which can distort to adapt to an internal change in volume due to the swelling or shrinking of the contained hydrogel. It could, for example have a concertina design using a rigid porous plastic or comprise a plant pot into which an integral permeable and conformable fabric sealing the hydrogel into a base or other containment are intended.

According to a second aspect of the present invention, there is provided a method of using the plant cultivation system of the first aspect, wherein the plant cultivation system is placed within a vessel containing a plant growth medium and a plant.

Preferably the vessel does not contain any apertures on the lower surface.

Alternatively, the vessel may contain apertures to allow excess water to drain away or to enter. In this mode it can exhibit self-regulating filling and refilling properties thereby removing the need for operator judgement or skill. It also allows the system to be used out of doors without risk of over-watering and flooding.

According to a third aspect of the present invention, there is provided a method of using the plant cultivation system of the first aspect, wherein the plant cultivation system is placed underneath a vessel containing a plant growth medium and plant, and wherein the vessel contains one or more apertures on the lower surface which is in contact with the plant cultivation system.

According to a fourth aspect of the present invention there is provided a method of using the plant cultivation system of the first aspect, wherein the plant cultivation system or systems is placed on or under capillary matting in a container and a plant containing vessel is also placed on the capillary matting and wherein the plant containing vessel is provided with one or more apertures in its base.

In order to provide a better understanding of the present invention, example embodiments will now be described by way of example only, and with reference to the accompanying Figure, in which:
Figure 1 shows a cross-sectional view of a plant cultivation system according to the first aspect of the present invention;
Figure 2 shows an expanded view of water soluble polymer in its preferred form according to the present invention;
Figure 3 shows a plant cultivation system in use according to one aspect of the present invention;
Figure 4 shows a plant cultivation system in use according to another aspect of the present invention;
Figure 5 shows the plant cultivation in use according to a yet further aspect of the present invention; and
Figure 6 shows a yet further embodiment of the present invention.

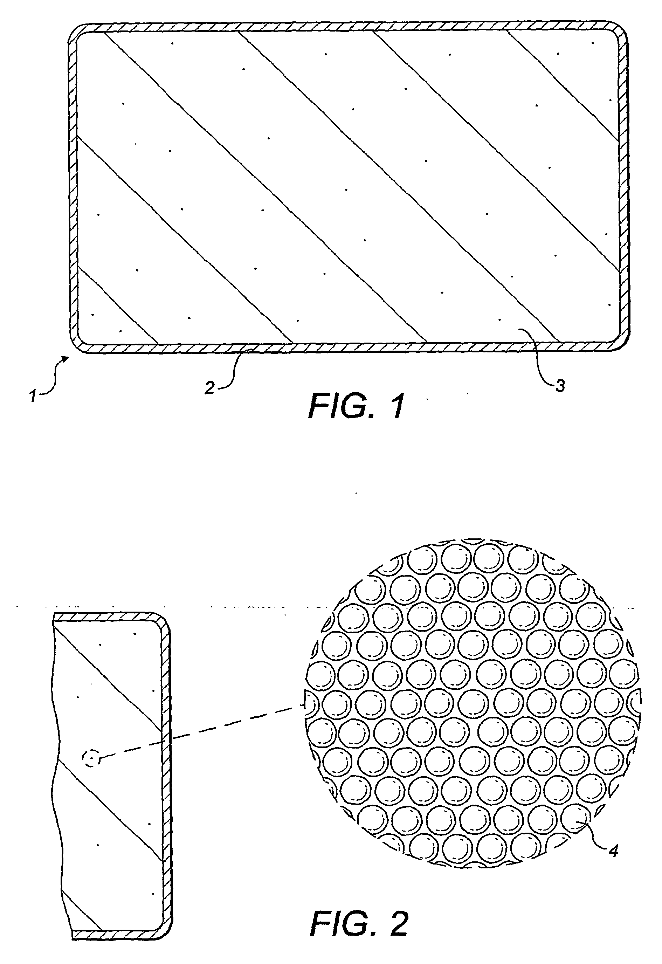

In the preferred embodiment of the present invention, there is provided a plant cultivation system which allows the long term watering of plants without the need for an open water reservoir. The plant cultivation system 1 is made from a water insoluble polymer which, in the preferred embodiment, is a water swellable hydrogel 3. The water soluble hydrogel is contained within a porous bag 2 which is made of material which can contain the hydrogel 3 and which is also rapidly permeable to water. This means that if water is poured on to the plant cultivation system 1, it immediately travels through the porous bag 2 and into the hydrogel 3, wherein the hydrogel 3 rapidly swells up upon contact with the water, therefore storing the water in a solid form. An example of the plant cultivation system 1, according to the present invention, can be seen in Figure 1.

In the preferred embodiment, the hydrogel 3 is made up from a number of particles 4. This is opposed to a solid amount of hydrogel 3. As the hydrogel 3 is particulate in form before and after swelling, as can be seen in Figure 2, it is able to take in water very rapidly due to the large surface area and porosity available. It also adds ventilation of water in vapour form as well a liquid form.

The plant cultivation system 1 therefore is able to hold a reservoir of water in solid form, which can be made available to a plant as the plant requires it. It can be seen that the plant cultivation system 1 can be made in a variety of different shapes and sizes, depending on the intended use for the system 1. For example, for window ledge pot plants, only a small plant cultivation system 1 would be required, whereas for arrangements for commercial uses, i.e., in office blocks, etc., larger or specially shaped plant cultivation systems 1 may be required. Also, the plant cultivation system 1 can be produced with different amounts of hydrogel 3 in different sized porous bags 2. Placing more or less hydrogel 3 into the same sized bag 2 would alter the water potential, so that different plant cultivation systems 1 with different water potentials can be produced, making them appropriate for different plants. For example, plant cultivation systems 1 could be produced specifically for plants which have low water requirements, or specifically for plants which have high water requirements, depending on the water potential in the bag. The ratio of water to hydrogel 3 will also determine the amount of water to add, and each plant cultivation system 1 can be provided with guidelines indicating the preferred water content for particular plants.

The invention uses poly(ethylene oxide) which has been rendered insoluble in water by chemical or physical cross-linking. This hydrogel is a rubbery hydrogel that is able to shrink and expand without the problem of cracking. It is also a neutral polymer, which means it has no negative effects on the plants, and also does not leach ions from water, which may be required by a plant. For example, the neutral character of poly(ethylene oxide) is less prone to specific ion absorption of Ca²⁺ ions, and as Ca²⁺ ions are required for shoot and root growth and development, this can be very important. Also, poly(ethylene oxide) does not shrink significantly in the presence of dissolved ionic species such as fertilisers or salts.

Also, mixtures of different hydrogel compositions can be utilised.

The preferred embodiment also allows for additives to be included into the hydrogel which may be beneficial for plants, and also additives such as colourants which would distinguish the hydrogel 3 or protect it against UV light.

The porous bag 2 in the present invention can be made of any appropriate porous material of adequate strength. Either single material types or mixtures of materials can be used to make the bag 2. In general, it is preferred to use a material with a surface contact angle below 90°, which allows capillary or diffusive passage of liquid water and also of vapour. In the preferred embodiment, cellulose is used to produce the porous bag 2. The cellulose is a staple fibre and in the preferred embodiment the cellulose material is in the form of felt or is knitted, braided or woven. In other embodiments, cellulose derivatives can be used, such as cellulose acetate.

Although the preferred embodiment uses a material with a surface contact angle below 90°, in the case of plants which have a very low water requirement, an alternative embodiment can be used where the porous bag 2 is produced for a material which has a high surface contact angle (i.e., above 90°). In this embodiment, micro-porous polythene can be used, as this will usually prevent liquid water from passing through, but will still allow water vapour to pass through. Many other polymers are known to those skilled in the art, which would similarly allow the passage of water vapour rather than liquid water. When using the larger particle sizes such as 1cm particles it is possible to utilise plastic netting such as is used commonly on the packaging of fruits and foodstuffs for commercial sale. A large variety of such packaging materials are well known to those skilled in the art.

In any of the embodiments, the hydrogel or water soluble polymer 3 must be put into the porous bag 2, and the porous bag 2 must be sealed in some manner. Sealing of the porous bag 2 may be through melting, heat sealing, gluing or stitching.

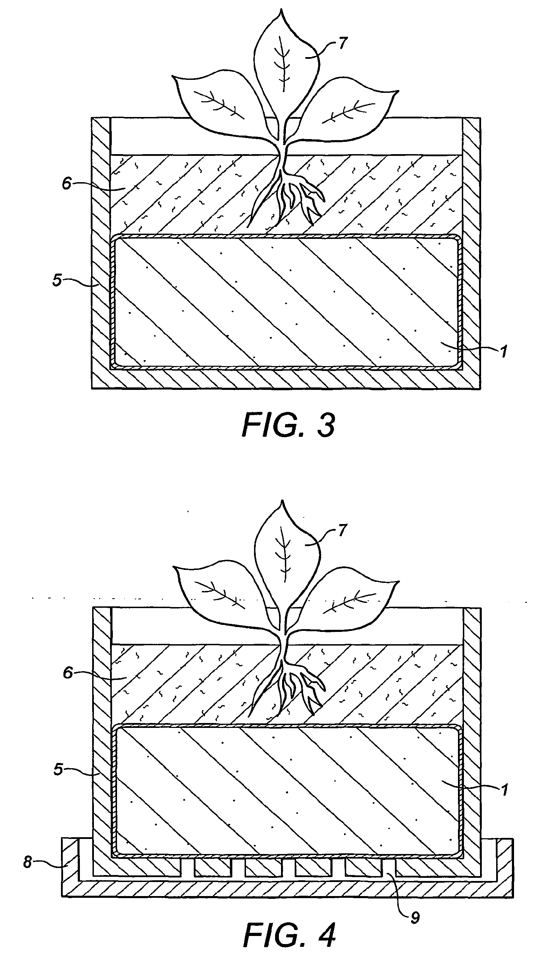

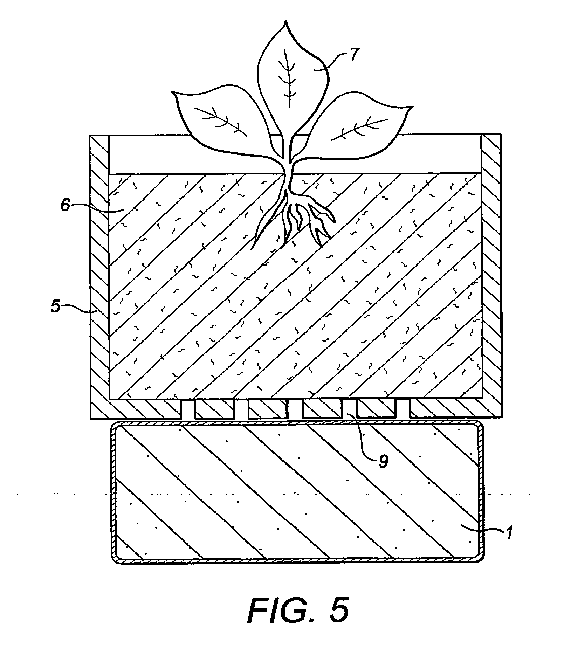

The plant cultivation system 1 can be used in a number of different ways. Examples of these can be seen in Figures 3, 4 and 5. Figure 3 shows the plant cultivation system 1 being placed in the bottom of a pot 5, which is solid other than for the opening at the top for the plant 7. Plant growth medium 6 is placed on top of the plant cultivation system 1, and the plant cultivation system 1 provides a reservoir of water which provides moisture to the plant 7 as and when it needs it. It is also worth noting that the system means water evaporation is slower than it typically would be if the pot 5 only contained plant growth medium 6. This mode of use provides "bottom watering" which is generally considered desirable in the industry. Some plants require "bottom watering".

Figure 4 shows another pot which has a plant cultivation system 1 placed within it. However, in this case the pot 5 has apertures 9 at the bottom and sits in a container 8 into which water can be poured to top up the reservoir in the plant watering system 1.

Another manner in which the plant cultivation system 1 can be used is by placing a pot 5 which contains apertures 9 on the lower surface in contact with the plant cultivation system 1. The plant 7 is placed in the pot 5 along with plant cultivation media 6 and is able to draw up water from the plant cultivation system, as and when required.

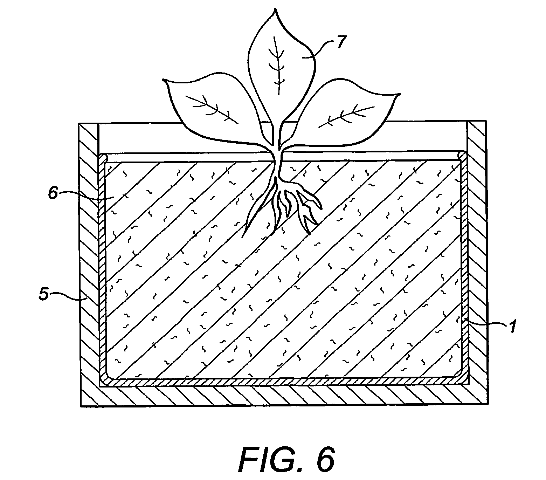

It can be seen that there are various other embodiments for which the plant water system can be used. For example, the plant watering system 1 can be formed in a pot-shape itself that is able to fit into a typical plant pot 5. This can be seen in Figure 6. Here the edges of the plant cultivation system 1 can be regularly topped up with water, without the necessity of pouring the water into the plant growth medium 6.

Also, the plant cultivation system 1 can simply be used as a back-up in cases where another continuous watering system is already in place. For example, if a valve is being used to allow water into the plant cultivation medium, the plant cultivation system 1 would typically be in a continuously fully swollen state with water simply passing through it. However, if the valve system failed, there would be a reservoir of water which would keep the plants well and healthy until the normal watering system is fixed.

If a pot 5 with apertures 9 in the base incorporates a plant cultivation system 1, then the system will charge itself with a repeatable self-regulating quantity of water. Any excess water would flow through the apertures 9 and can be seen in a tray or container into which the entire assembly can be placed. The presence of excess indicates that the cultivation system is fully and reproducibly charged with water. This mode of operation also removes the possibility of significant overwatering.

### Examples

### 1. Preparation of the poly(ethylene oxide) hydrogels.

The preparation of poly(ethyleneoxide) hydrogels is well described in the patent and general literature(e.g Polymeric Material,s GB 2235462 B, Neil Bonnette Graham and Christopher Raymond Moran ; N.B.Graham in "Hydrogels for Useful Therapy",pages 79-97 of "High Value Polymers", ed. A.H.Fawcett,Royal Society of Chemistry Special Publication No.87,1991). These materials can be prepared with a range of water swelling which increases with increasing poly(ethylene oxide) content. They can be granulated using conventional grinding equipment, by dry or wet grinding combined with sieving to provide particulate materials useful in the examples below. Other hydrogels are commercially available in a particulate form and may be purchased commercially.

### 2. Preparation of the plant watering system of this invention.

Capillary matting commonly used in the horticultural industry was purchased and cut into appropriately sized circular sections. Two of these sections were then stitched together around the outer perimeter leaving a two-three inch opening on one section of the perimeter only.A shaped bag with an opening was thus created. Through this opening a weighed amount of granulated hydrogel was inserted through a powder funnel. The weight of the hydrogel was selected to store the desired quantity of water for the specified reservoir storage volume of water, in a solidified form. Thus for a hydrogel which takes in five times its weight of water, a 1kg charge would produce a 5litre reservoir for water.

Similarly 2kg would produce a 10 litre reservoir. The manufacturing procedure is similar to the manufacture of an upholstery cushion and the products may be readily made in a variety of forms. The capillary matting bag is designed to have enough volume to be filled with the water-swollen hydrogel. The initial charge of dry hydrogel does not fill the containing bag. When water is poured onto the dry cushion it swells up like a balloon and provides the solidified water reservoir. The ratio of the bag volume to the weight of hydrogel charged can be used to reduce the degree of water swelling of the contained hydrogel. Lower degrees of swelling can provide lower soil water levels suiting plants desiring drier soil conditions.

The technology for placing particles into porous bags accessible to water is well known and has been particularly well developed in the field of tea bags. Inexpensive fine porous bags of many different sizes and shapes are commercialised and well known. Large scale commercial equipment for such bagging is available and well developed. Inexpensive light weight but strong nonwoven and heat-sealable fabrics are commonly used though many different materials are well known.

### 3. Different plants have quite different soil water content requirements and transpiration rates.

Some plants don't mind their roots being in liquid water while others only thrive under quite dry soil conditions. Yet others thrive under a wide range of soil conditions and are very robust. Up to this present invention, watering systems to provide long-term watering and also buffering of the soil at a humidity level suitable for the different plant root humidity requirements have not been available. This plant watering system now allows this highly desirable objective to be met. The examples below illustrate that the system can provide long term watering capability with different and desirable soil humidity levels for six plant types: Dracaena, Kentia palm , Peace Lilies(Spathiphyllum), Scindapsus, Schefflera and Ficus.

### Example 3.1 -Dracaena Janet Craig

Dracaena Janet Craig is a plant, with a low water transpiration. Two plants of Dracaena Janet Craig were potted up by a commercial interior landscaping company by professional horticultural technicians who subsequently looked after the plants. The plants were located in a commercial office. One of the plants contained a 5litre hydrogel bag reservoir, prepared as in Example 2 above while the other, the control did not and both were made up with identical compost according to best commercial practice. The technicians assessed the need for plant watering by assessing the feel of the compost and the appearance of the plant. The normal watering cycle in this case would have been at approximately two-weekly intervals. At the outset the plant pot containing the bag reservoir was given 5litres of water. The control was given the amount judged to be optimum from previous experience. During the next 69 days it was found necessary to water the control plant another three times while the pot containing the bag reservoir only required one (much larger) watering at fourty days. The plants in both plants were in good health and appearance and the soil humidity measured by a Theta meter remained high and similar in both systems.

The bag reservoir system clearly would allow watering at intervals of six weeks as compared with 2-3 weeks for the conventionally watered control.

### Example 3.2 - Dracaena Dermensis Lemon Lime

A Dracaena Dermensis Lemon Lime plant of approximate height 2 feet, was potted in compost into a plastic pot with a holes in the base. It was placed inside a larger pot into which a 1litre reservoir bag was placed and charged with one litre of water. The pot containing the plant was pressed down onto the previously weighed reservoir bag and at intervals and left in a domestic conservatory. The health of the plant was monitored , the reservoir bag was weighed as was the plant with soil and pot. The soil humidity was measured on the same occasion with a Westminster soil moisture meter which measured the soil moisture level on a range of 0-10. Three separate soil moisture readings were taken at different locations within the pot and the results averaged. When water was provided it was through the pot containing the plant. This ensured that the soil was thoroughly wetted. The weight loss of the system was used to calculate the daily weight loss which equates approximately to the transpiration of the plant.the trial was started on the 23-July 2002 in the summer. At 36 days the plant was in good condition even though the roots had grown out of the bottom of the pot and appeared dry. The average daily weight loss for the period was 11.7g/day. The reservoir bag still felt damp to the touch and was found to have lost 420g of water over the period which was less than half of the water initially charged. One litre of water was added to the pot onto the top soil surface. It charged the reservoir bag with no visible liquifed water to be seen. At 69 days the plant was in good condition apart from slight browning of three leaf tips.

Considerable new shooting was evident. The soil was very dry and gave a reading of zero on the moisture meter. The roots had however grown into the reservoir bag at this point and the plant throughout the trials seemed to thrive under these conditions. Only 280g of the water in the bag remained. The effective daily water loss over the period was approximately 14.5g/day. A further one litre of water was applied to the top of the pot and after a 10 minute delay the average moisture reading was 4. The plant was not watered again until 181dayswhen the moisture reading was 0.8. There remained more than half of the last-charged water and the calculated "transpiration" rate over the period was 16g/day. Over the 181 days only three waterings had been required. The conformation of the reservoir and the pot were now changed. The plant was removed from the pot and placed in a different ceramic pot without any holes in the base. To allow the plant to be placed in the pot to the appropriate depth the same reservoir bag as previously used was placed in the pot at the side of the plant roots. This provided a simple view of the top of the bag level with top of the compost and allowed the water content to be assessed by sight and touch. 1 litre of water was added and the pot and contents weighed. It was estimated that the pot contained 1640g of water which would be expected to last approximately 100days at the previously measured rate of transpiration. The plant was left for 113 days before checking and watering. On weighing it was found that the system had lost 1030g which equates to a rate of 9.1g/d. The average moisture reading was 0.2. The compost was dry and crumbly. In spite of these apparently dry conditions the plant looked to be in good health and still had new shoots. A further litre of water was added. It was assessed again at 160days when the weight loss over the period measured 1180g and the soil humidity was 0.2. The interval was only 47days but the average transpiration had doubled to 25.1g/d. It now being May this was thought to be due to the increased metabolism due to Spring conditions. The plant was of very good appearance and showed considerable growth and new shoots.

1.41itres of water and 2 caps of Miracle Grow liquid plant feed were added. At 188days The weight loss was 1.2kg and the soil humidity was 0.1, the average transpiration had risen again to 42.9g/d over the 28days interval.1.5 litres of water were added and four caps of the same liquid fertiliser. The moisture reading after standing for ten minutes was 7.9. At 218days the plant was still in excellent condition and the test was discontinued. It is clear that the quite modest bag reservoir system satisfactorily maintained the plant with watering intervals in the range one to three months depending on the time of the year. It was also clear that the soil moisture measurement can reach the very low values of 0.1 without damage to the plant. It was assumed that once again the roots had penetrated the reservoir bag and was able to access the available water.

### Example 3.3 - Howia Kentia Palm

A 5 litre water capacity reservoir bag was made by introducing 1kg of a crosslinked poly(ethylene oxide) based polymer with a water uptake of five times its dry weight, into a circular bag made from capillary matting as described in Example 2 above. This bag was soaked and drained in water when it took up and retained 5kg of water providing a 5kg water reservoir. This water-filled reservoir was placed in the bottom of a large plastic circular planter-pot without any bottom drainage holes. A three foot high healthy specimen of Howea Kentia Palm was potted up on top of, and in capillary contact with, the bag reservoir. John Innes No. 3 compost was used for the potting. The top surface of the soil in the planter was covered by an inch deep layer of coarse white marble to provide a decorative effect. One cap of BabyBio liquid fertilised feed was sprinkled over the surface. The weight of the total pot+water+compost+plant was taken. The plant was placed in a domestic lounge, close to a large window, in a centrally heated house. The trial commenced in Scotland in the summer of 2002(25 June). The general appearance of the plant was monitored by visual inspection and weighing the total system from time to time to measure the weight loss which was taken to be an approximation to the transpiration and indicated the water usage and water requirement. After 64days the plant looked in good health with new shoots at the base and growth at the top. The weight loss over this period was 4.5kg indicating a daily rate of loss of 70.3g/d. 5litres of water were added to the top surface, the system was reweighed and left for a further period. After an interval of 69days and a total elapsed time of 133days the weight loss was 5.4kg. The average moisture meter reading was 2.4. 5litres of water were added and after 10 minutes the moisture meter average was 10. Three small older fronds were removed as they contained a few browning leaves. There was considerable fresh new growth. The season was now entering winter. The plant continued to look healthy with new growth. After a further interval of 92 days(total elapsed time of 225 days).The plant still looked healthy. The weight loss over the 92 days was found to be 3.5kg so 3.5kg water was added to the pot.

After a further period of 101 days (total elapsed time 326 days) the weight loss was 6.2kg and the soil average humidity reading was 0.3. One new leaf and one older one had some brown tips or brown patches. Otherwise there were no defects and the plant continued to look healthy. Seven litres of water and 3 caps of Miracle Grow liquid plant food were added which maintained the plant until beyond the full year of the test.
These results were confirmed by a number of other similar but less rigorously monitored tests on the same plant species.

These results demonstrate that the bag reservoir can sustain in good health, Howea Kentia palm plants using watering intervals of from 64 to 101 days. A 60 day watering interval used throughout the year will provide satisfactory watering. The healthy survival of the plant under even extremely dry soil conditions can be readily understood if the roots have penetrated into the reservoir bag as would be expected, and are able to access the remaining water there concentrated.

### Example 3.4 - Scindapsus

In experiments run in the same manner as for the Kentia palms in example 1.3. Two good quality Scindapsus plants of initial height 4 feet, were potted up with John Innes NO.3 compost over a 4litre and an 8litre bag reservoir containing granulated hydrogel comprising predominantly poly(ethylene oxide). A solid pole was used as a support for the growing plant. They were placed near windows in a very sunny conference room which was centrally heated. The reservoirs were charged with the appropriate 41 and 81 of water before the potting. The pot weights, water added and soil humidities were measured over three months. The water used, the water remaining in the pots were calculated over the three months of the test..The results are given in the tables below The pants were healthy at all times and showed vigorous new growth without any signs of wilting at any stage.

| Scindapsus 8 litre reservoir. | | | | | | |
|---|---|---|---|---|---|---|
| Date of visit | Plant No | Total weight (kg) | Soil humidity | Water added (l) | Water left in system (l) | Water used (l) sin ce last observatio n |
| 13-Mar | 5 | 33 | 4.1 | 0 | x | x |
| 02-Apr | 5 | 30 | 3.1 | 0 | 6 | x |
| 15-Apr | 5 | 29.5 | 2 | 4 | 5.5 | 0.5 |
| 23-Apr | 5 | 33 | 4 | 0 | 9 | 0.5 |
| 30-Apr | 5 | 31 | 3.5 | 0 | 7 | 2 |
| 08-May | 5 | 30.9 | 3.5 | 0 | 6.9 | 0.1 |
| 16-May | 5 | 30.28 | 3 | 0 | 6.28 | 0.62 |
| 23-May | 5 | 29.66 | 2.5 | 0 | 5.66 | 0.62 |
| 06-Jun | 5 | 29.42 | 2 | 0 | 5.42 | 0.24 |
| 18-Jun | 5 | 28.92 | 2 | 0 | 4.92 | 0.5 |
| 26-Jun | 5 | 28.62 | 1.5 | 0 | 4.62 | 0.3 |

| Scindapsus 4 litre reservoir. | | | | | | |
|---|---|---|---|---|---|---|
| Date of visit | Plant No | Total weight (kg) | Soil humidity | Water added (litres) | Water left in system (litres) | Water used (litres) since last observatior |
| 13-Mar | 6 | 25 | 4.1 | 0 | x | x |
| 02-Apr | 6 | 21.5 | 4 | 0 | 1.5 | x |
| 15-Apr | 6 | 21 | 2 | 4 | 1 | 0.5 |
| 23-Apr | 6 | 25 | 4 | 0 | 5.5 | 0.5 |
| 30-Apr | 6 | 24 | 3.5 | 0 | 4.5 | 1 |
| 08-May | 6 | 22.52 | 3 | 0 | 3.02 | 1.48 |
| 16-May | 6 | 21.88 | 3 | 0 | 2.33 | 0.69 |
| 23-May | 6 | 21.28 | 2 | 0 | 1.78 | 0.55 |
| 06-Jun | 6 | 21.02 | 2 | 0 | 1.52 | 0.26 |
| 18-Jun | 6 | 20.28 | 2 | 0 | 0.78 | 0.74 |
| 26-Jun | 6 | 20.12 | 2 | 0 | 0.62 | 0.16 |

The average daily water loss was approximately 75g/d and both the 41 and 81 reservoirs were able to provide for all of the water needs of both plants during the Spring season. Only one addition of 41 water each was required to each pot during the 3 months. The 81 reservoir plant still contained 4.61 water which should provide for at least a further month without any extra water being added (even recognising that this figure includes a significant error for the amount of water and the CO₂ fixed by the growth of the plant). These results indicate very clearly how the increase of the reservoir size does not cause any problem to the plants and does not significantly alter the rate and total of water loss but simply provides a larger water supply and allows longer intervals between watering to be designed into the plant pot by choice of the reservoir size.

### Example 3.5 - Schefflera Gold Cappella

Similar tests to example 3.4 were made using Schefflera Gold Cappella plants. Using an initial reservoir charge of 41 water with 3 caps of Miracle Grow liquid fertiliser only one extra watering of 2.51 was required over a period of six months from January to July. The plants looked very healthy with a lot of new growth. The plant height increased approximately 12 inches.

### Example 3.6 - Ficus Benjamina

Ficus Benjamina is a species which quickly shows it is short of water by dropping its leaves and is difficult to maintain without so doing. A 4 foot high variegated Ficus Benjamina was purchased and maintained in the pot in which it was bought. It was placed in a larger ceramic pot which had no drainage holes in the base in the bottom of which was a fully charged eight litre hydrogel bag reservoir. The pot containing the Ficus was placed on top of the bag reservoir so that capillary contact was established via the holes in the base of the Ficus pot. A marker stick was placed alongside the bag reservoir and the position of a mark on the side of the pot recorded on the stick for the fully charged and empty reservoir. The amouns of water remaining in the reservoir was readily measured by observing the position of the mark on the pot against the upper and lower marks on the stick. The system was placed on a sunny window ledge and monitored over a period of a year. The plant was at all times healthy sending out new shoots and it grew approwimately two feet in height. When the reservoir water level fell to approximately half full water was added to the gap between the inner and outer pots to bring it back to a filled or almost filled state. The mark on the pot and the top mark on the stick were aligned in this condition. This was done approximately every two months. The Ficus plant showed very little shedding of its leaves during this period even during hot spells of weather. The roots of the plant had penetrated into the reservoir bag and if one lifted the plant from the base the reservoir bag came up with it.

This experiment demonstrates a different method for feeding water to the plant and measuring the water content of the reservoir. Being solidified, no liquid water is present and if desired for different plants, the reservoir could be allowed to only contain a fraction of its total capacity. This method of operation prevents over watering and allows the reservoir to act as a moisture buffer for plants requiring drier soil conditions.

### Example 3.7 - Peace Lily

Peace Lilies are particularly useful plants for the evaluation of watering as they quickly indicate a shortage of water from the sagging of their leaves. They recover if watered soon after the sagging.

Three very large Peace Lilies (approximately 3 feet tall) were separately potted up in two large circular fibreglass commercial display containers containing in one a four litre and in the other an eight litre bag reservoirs fully charged with water. These containers did not have drainage holes in their bases as they were of the type intended for interior landscaping. The water transpiration of these plants is so high that in spite of their very desirable appearance are rarely used as they are difficult and expensive to maintain without leaf sag. The two plants were placed in a large-windowed centrally heated lounge in a commercial building.

The results are given below. The 8litre reservoir system maintained the flowering plants in good health and appearance with no sagging of the leaves at all times during the trial. The four litre bag maintained the plants well but on three occasions leaf sagging was observed. These corresponded to the occasions when there was a hot spell and the water left in the system had fallen to less than 0.4 litres and the soil humidity in two out of the three cases had fallen below 3.0. In these cases the watering interval was 23days, 20 days and14 days which is very good for these plants. These results demonstrate the ability of the plant maintenance system to sustain these high water demand plants over long watering intervals and that, with the appropriate choice of the reservoir storage capacity, can provide confidence in their use over these prolonged periods without the poor appearance of sagging leaves.

| *Peace Lily; 4 litres reservoir* | | | | | | |
|---|---|---|---|---|---|---|
| Date of visit | Plant No | Total weight (kg) | Soil humidity | Water added (l) | Water left in system (l) | Water used (l) |
| 13-Mar | 3 | 21 | 4 | 0 | | |
| 02-Apr | 3 | 20 | 4 | 4 | 3 | |
| 15-Apr | 3 | 19 | 3.5 | 2 | 2+2 | |
| 23-Apr | 3 | 19 | 3.5 | 2 | 2+2 | |
| 30-Apr | 3 | 19 | 3.5 | 0 | 2 | |
| 08-May | 3 | 22.18 | 4 | 0 | 2 | |
| 16-May | 3 | 20.06 | 3 | 4 | 0.06 | 2.12 |
| 23-May | 3 | 22.2 | 4 | 4 | 2.2 | 1.86 |
| 06-Jun | 3 | 20.02 | 3.5 | 8 | 0.02 | 6.18 |
| 18-Jun | 3 | 22.18 | 4 | 0 | 2.2 | 5.84 |
| 26-Jun | 3 | 20.34 | 2.5 | 8 | 0.36 | 1.84 |
| 02-Jul | 3 | 26.72 | 4 | 0 | 6.74 | 1.62 |

| *Peace Lily, 8 litres reservoir.* | | | | | | |
|---|---|---|---|---|---|---|
| Date of visit | Plant No | Total weight (kg) | Soil humidity | Water added (l) | Water left in system (l) | Water used (l) |
| 13-Mar | 4 | 21.5 | 4 | 0 | x | 0 |
| 02-Apr | 4 | 26.5 | 4.2 | 8 | | |
| 15-Apr | 4 | 24 | 4 | 2 | | |
| 23-Apr | 4 | 21 | | 2 | | |
| 30-Apr | 4 | 20 | 2 | 0 | | |
| 08-May | 4 | 23.48 | 3 | 0 | 8.48 | |
| 16-May | 4 | 21.04 | 3 | 4 | 6.04 | 2.44 |
| 23-May | 4 | 23.02 | 4 | 4 | 8.02 | 2.02 |
| 06-Jun | 4 | 20.64 | 3.2 | 8 | 5.64 | 6.38 |
| 18-Jun | 4 | 23.84 | 4 | 0 | 8.84 | 4.8 |
| 26-Jun | 4 | 21.26 | 3 | 8 | 6.26 | 2.58 |
| 02-Jul | 4 | 24.44 | 3.5 | 0 | 9.44 | 4.82 |

### 4. A Self-regulating watering system for interior and exterior use.

Capillary matting was purchased from a Do-It-Yourself store and a rectangle of the fabric cut from it such that when glued using a hot-melt adhesive around it's edges it formed a rectangular container of 10 litres internal volume. A short length of the edge was left open to provide a filling hole through which was charged 1kg of a poly(ethylene oxide) based hydrogel able to take up by swelling five times its weight of water (51). The bag was swollen in water when it took on a "large sausage" shape and when weighed was found to contain 5kg of water in the reservoir.

The charged reservoir was placed in a large plastic plant trough with two large drainage holes in its base. The reservoir occupied approximately one half of the trough volume.

The plant trough was made up with Levington number 3 compost and 20 flowering annual plants were planted into it. The plants included white and pink petunia, lobelia, verbena, apple blossom diastara and solaire. The plants were placed in a domestic indoor conservatory during June. After fourteen days two sets of plants; the petunia and verbena, looked very healthy and were breaking into flower. The diastara, lobelia and solaire which were already in flower were showing slight signs of shortage of water but recovered when water was added. By weight difference the trough had lost 5kg of water over the two weeks. The average daily loss was thus 357g/day which is very high. 6kg of water was added to the trough from the upper surface and was absorbed so rapidly that it did not come out of the drainage holes in the base.of the trough. After a further 12 days (26 days total elapsed time) the plants looked very healthy and were flowering well. The soil in the trough felt damp to the touch. At 29 days however some of the plants the plants were beginning to wilt. They recovered on watering. The measured water loss over the 15 days interval was 7kg.

The trough was now placed outside so that it was open to the elements and would be able to recharge itself when it rained. It now acts as a patio planter. Excess water would drain out through the drainage holes in the base of the trough. In Scotland it did not need watering for several months by virtue of the natural rainfall. The plants continued to flourish and the trough did not become waterlogged.

This example demonstrates the ability of the system to maintain for two weeks, a considerable number of plants under conditions which normally in a trough or hanging basket would require watering every few days. It also demonstrates the ability of the system to utilise natural rainfall to recharge the reservoir. The reservoir will maintain a filled charge of 5litres of water. If a tray is placed under the trough indoors the appearance of any significant amount of water in the tray when the water is being added to the top shows that the reservoir is fully charged.

Other similar experiments with floral hanging baskets demonstrated that the baskets could be maintained without watering for periods in excess of three weeks.

### Conclusion

The six species of plants were chosen because they gave a spread of water requirements, the Kentia Palms and the Scindapsus take up an average amount of water and the Peace Lily takes up a large volume of water over a short period of time, if the soil of the plant runs low on water it provides the dramatic visual effect of drooping its leaves, thus making it difficult for IL companies to service and provide this type of plant for clients.

All the plants are seen to be healthy and sending up new shoots leaves and flowers in the warm summer period.

### Laboratory Control Trial

The third of the trials were set up to monitor the bag system against a polystyrene placebo control. Two laboratory bred Ficus Benjiminas were selected as shedding of leaves is a common indicator for over or under watering of this species of plants. Plant A was potted up as normal with a block of polystyrene packing foam at the base in place of a water reservoir, 2 Litres of water was added. Plant B was potted up as above with a 1kg plant watering system, which contained 8 Litres of water. The ongoing results can be seen in Table below:

**Table: Control Ficus and 8-litre bag Ficus**

| Date of visit | Plant A weight (kg) | Soil Humidity | Water added (l) | Plant B weight (kg) | Soil Humidity | Water added (l) |
|---|---|---|---|---|---|---|
| 17-Feb | 11.5 | 1.5 | 2 | 19 | 3.5 | 0 |
| 24-Feb | 11.5 | 1.1 | 0 | 19 | 3.5 | 0 |
| 07-Mar | 11 | 0.9 | 0 | 18.5 | 3.5 | 0 |
| 27-Mar | 10 | 1 | 0 | 17.5 | 3.5 | 0 |
| 14-Apr | 9 | 0.8 | 2 | 15 | 3 | 0 |
| 22-Apr | 11 | 1.3 | 0 | 14.5 | 2.5 | 0 |
| 28-Apr | 11 | 1.2 | 0 | 14 | 2 | 0 |
| 06-May | 10.88 | 1 | 0 | 14.84 | 1.75 | 0 |
| 14-May | 10.52 | 1 | 0 | 14.4 | 1.5 | 0 |
| 21-May | 10.14 | 1 | 0 | 14.06 | 1 | 0 |
| 29-May | 9.92 | 1 | 0 | 13.7 | 1 | 0 |
| 06-Jun | 9.62 | 1 | 0 | 13.28 | 1 | 0 |
| 17-Jun | 9.22 | 0.7 | 2 | 12.76 | 0.7 | 7 |
| 25-Jun | 10.62 | 3 | 0 | 18.92 | 3 | 0 |

### Conclusion

As can be seen by the results in the graphs and Table 8 above, the addition of an 8-litre plant watering systems has reduced the frequency of watering of an identical plant in the laboratory to one third of that of normal hand watering. This is a significant improvement.

It can be seen that there are a number of benefits to this invention, over and above the prior art. The embodiments disclosed are merely exemplary of the invention which may be embodied in various different forms. Therefore, the specific structural and functional details disclosed herein are not to be interpreted as limiting, but merely as a basis for the Claims and for teaching one skilled in the art as to the various uses of the present invention in any appropriate manner. In particular, the materials for the porous bag and hydrogel as described in the embodiments should not be considered as limiting, as alternative materials which have the properties that are described as being required, could also be used with the same effect.

## Claims

1. A plant cultivation system comprising a hydrogel contained within porous enclosure, **characterised in that** the hydrogel is a particulate poly(ethylene oxide) which has been rendered insoluble in water by chemical or physical cross-linking and that the porous enclosure is a conformable sealed porous bag.

2. A plant cultivation system as in any of the previous Claims, wherein the hydrogel particles are between 100 microns to 1cm in diameter.

3. A plant cultivation system as in any of the previous Claims, wherein the poly(ethylene oxide) hydrogel swells rapidly on contact with water.

4. A plant cultivation system as in any of the previous Claims, wherein one kilogram of dry poly(ethylene oxide) hydrogel will store 3 to 20 litres of water.

5. A plant cultivation system as in any of the previous Claims, wherein the porous bag is rapidly permeable to water.

6. A plant cultivation system as in any of the previous Claims, wherein the size of the pores in the porous bag do not allow the significant escape of contained particulate hydrogel.

7. A plant cultivation system as in any of the previous Claims, wherein the porous bag is sealed by heat sealing.

8. A plant cultivation system as in Claims 1 to 8, wherein the bag is sealed by stitching.

9. A plant cultivation system as in Claims 1 to 8, wherein the bag is sealed by glue.

10. A plant cultivation system as in any of the previous Claims, wherein the porous bag is produced from a material with an air water surface contact angle below 90°.

11. A plant cultivation system as in any of the previous Claims, wherein the porous bag is produced from cellulose or a cellulose derivative.

12. A method of using a plant cultivation system, as described in any of the previous Claims, wherein the plant cultivation system is placed within a vessel containing a plant growth medium and a plant.

13. A method of using a plant cultivation system as in Claim 14, wherein the vessel does not contain any apertures on the lower surface.

14. A method of using a plant cultivation system as in Claim 14, wherein the vessel contains apertures to allow excess water to drain away or enter.

15. A method of using the plant cultivation system described in Claims 1 to 11, wherein the plant cultivation system is placed underneath a vessel containing a plant growth medium and a plant, and wherein the vessel contains one or more apertures in the lower surface which is in contact with the plant cultivation system.

16. A method of using the plant cultivation system described in any of Claims 1 to 11, wherein the plant cultivation system is placed on or under capillary matting in a container and a plant containing vessel one or more apertures in its lower surface is placed on the capillary matting.

## Patentansprüche

1. Ein Pflanzenanbausystem, das ein sich in einer durchlässigen Hülle befindliches Hydrogel umfasst und das sich dadurch auszeichnet, dass das Hydrogel ein partikuläres Poly(ethylenoxid) ist, das durch chemische oder physische Vernetzung wasserunlöslich gemacht wurde und das sich dadurch auszeichnet, dass die durchlässige Hülle ein angemessener, versiegelter, durchlässiger Beutel ist.

2. Ein Pflanzenanbausystem nach den vorausgehenden Ansprüchen, wobei die Hydrogelpartikel einen Durchmesser zwischen 100 Mikrometer und 1 cm haben.

3. Ein Pflanzenanbausystem nach den vorausgehenden Ansprüchen, wobei das Poly(ethylenoxid)-Hydrogel bei Berührung mit Wasser rasch anschwillt.

4. Ein Pflanzenanbausystem nach den vorausgehenden Ansprüchen, wobei ein Kilogramm des trockenen Poly(ethylenoxid)-Hydrogels 3 bis 20 Liter Wasser speichert.

5. Ein Pflanzenanbausystem nach den vorausgehenden Ansprüchen, wobei der durchlässige Beutel Wasser schnell durchlässt.

6. Ein Pflanzenanbausystem nach den vorausgehenden Ansprüchen, wobei die Größe der Poren des durchlässigen Beutels ein bedeutendes Austreten des partikulären Hydrogels verhindert.

7. Ein Pflanzenanbausystem nach den vorausgehenden Ansprüchen, wobei der durchlässige Beutel mittels Heißsiegeln versiegelt wird.

8. Ein Pflanzenanbausystem nach den Ansprüchen 1 bis 8, wobei der Beutel durch Nähen versiegelt wird.

9. Ein Pflanzenanbausystem nach den Ansprüchen 1 bis 8, wobei der Beutel mittels Klebstoff versiegelt wird.

10. Ein Pflanzenanbausystem nach den vorausgehenden Ansprüchen, wobei der durchlässige Beutel aus einem Material hergestellt wird, das mit Bezug auf die Luft und die Wasseroberfläche einen Kontaktwinkel aufweist, der unter 90° liegt.

11. Ein Pflanzenanbausystem nach den vorausgehenden Ansprüchen, wobei der durchlässige Beutel aus Zellulose oder einem Zellulosederivat hergestellt wird.

12. Ein Verfahren zur Verwendung eines Pflanzenanbausystems wie es innerhalb der vorausgehenden Ansprüche beschrieben wurde, wobei das Pflanzenanbausystem in ein Gefäß platziert wird, in dem sich ein Pflanzennährmedium und eine Pflanze befinden.

13. Ein Verfahren zur Verwendung eines Pflanzenanbausystems nach Anspruch 14, wobei das Gefäß auf der Unterseite keine Öffnungen aufweist.

14. Ein Verfahren zur Verwendung eines Pflanzenanbausystems nach Anspruch 14, wobei das Gefäß Öffnungen aufweist, durch die überschüssiges Wasser abfließen oder eindringen kann.

15. Ein Verfahren zur Verwendung eines Pflanzenanbausystems wie es in den Ansprüchen 1 bis 11 beschrieben ist, wobei das Pflanzenanbausystem unter ein Gefäß platziert wird, in dem sich ein Pflanzenmedium und eine Pflanze befinden und wobei das Gefäß eine oder mehrere Öffnungen auf der Unterseite aufweist, welche Kontakt zu dem Pflanzenanbausystem haben.

16. Ein Verfahren zur Verwendung eines Pflanzenanbausystems wie es in den Ansprüchen 1 bis 11 beschrieben ist, wobei das Pflanzenanbausystem entweder auf oder unter eine Kapillarmatte in einem Behälter platziert wird und ein Gefäß, das eine Pflanze enthält und eine oder mehrere Öffnungen auf seiner Unterseite aufweist, auf die Kapillarmatte gestellt wird.

## Revendications

1. Système de culture de plantes comprenant un hydrogel contenu dans une enceinte poreuse, **caractérisé en ce que** ledit hydrogel est un poly(éthylène oxyde) particulaire rendu insoluble dans l'eau par réticulation chimique ou physique et ladite enceinte poreuse est un sac poreux scellé de dimension suffisante.

2. Système de culture de plantes selon l'une quelconque des revendications précédentes, dans lequel les particules d'hydrogel ont un diamètre de 100 microns à 1 cm.

3. Système de culture de plantes selon l'une quelconque des revendications précédentes, dans lequel l'hydrogel poly(éthylène oxyde) gonfle rapidement au contact de l'eau.

4. Système de culture de plantes selon l'une quelconque des revendications précédentes, dans lequel un kilogramme d'hydrogel poly(éthylène oxyde) emmagasinera 3 à 20 litres d'eau.

5. Système de culture de plantes selon l'une quelconque des revendications précédentes, dans lequel le sac poreux est rapidement perméable à l'eau.

6. Système de culture de plantes selon l'une quelconque des revendications précédentes, dans lequel la taille des pores du sac poreux ne permet pas de fuite significative des particules de l'hydrogel qu'il contient.

7. Système de culture de plantes selon l'une quelconque des revendications précédentes, dans lequel le sac poreux est scellé par thermoscellage.

8. Système de culture de plantes selon les revendications 1 à 8, dans lequel le sac est scellé par couture.

9. Système de culture de plantes selon les revendications 1 à 8, dans lequel le sac est scellé par collage.

10. Système de culture de plantes selon l'une quelconque des revendications précédentes, dans lequel le sac poreux est produit à partir d'un matériau présentant un angle de contact de surface air-eau inférieur à 90°.

11. Système de culture de plantes selon l'une quelconque des revendications précédentes, dans lequel le sac poreux est produit à partir de cellulose ou d'un dérivé de la cellulose.

12. Procédé d'utilisation d'un système de culture de plantes, comme décrit dans l'une quelconque des revendications précédentes, dans lequel ledit système de culture de plantes est placé à l'intérieur d'un récipient contenant un milieu de croissance et une plante.

13. Procédé d'utilisation d'un système de culture de plantes selon la revendication 14, dans lequel le récipient ne contient aucune ouverture sur la surface inférieure.

14. Procédé d'utilisation d'un système de culture de plantes selon la revendication 14, dans lequel le récipient contient des ouvertures pour permettre l'écoulement ou l'entrée de l'excédent d'eau.

15. Procédé d'utilisation du système de culture de plantes décrit dans les revendications 1 à 11, dans lequel ledit système de culture de plantes est placé sous un récipient contenant un milieu de croissance et une plante, ledit récipient contenant une ou plusieurs ouverture(s) dans la surface inférieure qui est en contact avec le système de culture de plantes.

16. Procédé d'utilisation du système de culture de plantes décrit dans les revendications 1 à 11, dans lequel ledit système de culture de plantes est placé sur ou sous un tapis capillaire dans un récipient et un récipient contenant une plante et présentant une ou plusieurs ouverture(s) dans sa surface inférieure est placé sur le tapis capillaire.
